(19) Europäisches Patentamt
European Patent Office
Office européen des brevets

(11) **EP 3 875 268 A1**

## EUROPEAN PATENT APPLICATION
published in accordance with Art. 153(4) EPC

(43) Date of publication:
**08.09.2021 Bulletin 2021/36**

(21) Application number: **19880437.9**

(22) Date of filing: **28.10.2019**

(51) Int Cl.:
*B32B 25/08* (2006.01)    *B60C 1/00* (2006.01)
*B60C 13/00* (2006.01)    *C08K 5/098* (2006.01)
*C08K 7/00* (2006.01)    *B60C 11/00* (2006.01)

(86) International application number:
**PCT/JP2019/042217**

(87) International publication number:
**WO 2020/090758 (07.05.2020 Gazette 2020/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2018 JP 2018206101**

(71) Applicant: **BRIDGESTONE CORPORATION**
**Chuo-ku**
**Tokyo 104-8340 (JP)**

(72) Inventor: **URATA Tomohiro**
**Tokyo 104-8340 (JP)**

(74) Representative: **Oxley, Robin John George**
**Marks & Clerk LLP**
**15 Fetter Lane**
**London EC4A 1BW (GB)**

(54) **TIRE**

(57) Provided is a tire that prevents a polyurethane foam layer from discoloring to brown. A tire comprises: a polyurethane foam layer laminated on an outer layer of the tire with a barrier layer therebetween, wherein the polyurethane foam layer contains a polyurethane foam, and the barrier layer is formed from a rubber composition containing butyl rubber as a rubber component.

EP 3 875 268 A1

## Description

CROSS REFERENCE TO RELATED APPLICATION

This application claims priority to Japanese Patent Application No. 2018-206101 filed on October 31, 2018, the disclosure of which is incorporated herein by reference.

TECHNICAL FIELD

The present disclosure relates to a tire.

BACKGROUND

Tires, including sidewalls and treads, are constantly in contact with the atmosphere. Due to deterioration caused by ozone in the atmosphere, cracks tend to occur in the tire, which requires improvement. Since the tire is repeatedly deformed during running of the vehicle, cracks, even if small at first, may extend and become large and visible. This impairs the appearance of the tire.

To protect the external surface of the tire against ozone, for example, JP 2003-535762 A (PTL 1) discloses a method whereby, upon bonding between a diene-based rubber composition and polyurethane which are poor in affinity, the surface of the diene-based rubber composition is functionalized, and a polyurethane coating layer bonded through a chemical bond is formed by application.

CITATION LIST

Patent Literature

PTL 1: JP 2003-535762 A

SUMMARY

(Technical Problem)

However, it has been found that an antioxidant transfers from the rubber of the tire to the polyurethane foam layer, and the polyurethane foam layer discolors to brown after a long period (about 20 days) from the completion of the product.

It could therefore be helpful to provide a tire that prevents a polyurethane foam layer from discoloring to brown.

(Solution to Problem)

A tire according to the present disclosure is a tire comprising: a polyurethane foam layer laminated on an outer layer of the tire with a barrier layer therebetween, wherein the polyurethane foam layer contains a polyurethane foam, and the barrier layer is formed from a rubber composition containing butyl rubber as a rubber component (A). The tire according to the present disclosure can prevent the polyurethane foam layer from discoloring to brown.

(Advantageous Effect)

It is therefore possible to provide a tire that prevents a polyurethane foam layer from discoloring to brown.

DETAILED DESCRIPTION

Embodiments according to the present disclosure will be described below. The following description is intended for illustrative purposes only, and is not intended to limit the scope of the present disclosure in any way.

In the present disclosure, two or more embodiments may be combined as appropriate.

(Tire)

A tire according to the present disclosure is a tire comprising: a polyurethane foam layer laminated on an outer layer of the tire with a barrier layer therebetween, wherein the polyurethane foam layer contains a polyurethane foam, and the barrier layer is formed from a rubber composition containing butyl rubber.

<Barrier layer>

The barrier layer has a function of keeping an antioxidant contained in the tire rubber from transferring to the polyurethane foam layer and preventing the polyurethane foam layer from discoloring to brown.

- Rubber composition of barrier layer

In the tire according to the present disclosure, the barrier layer is formed from a rubber composition containing butyl rubber as a rubber component (A).

- Butyl rubber

The butyl rubber (IIR) is not limited, and publicly known butyl rubber may be used. The butyl rubber may be unmodified butyl rubber, or modified butyl rubber such as chlorinated butyl rubber or brominated butyl rubber.
These butyl rubbers may be used alone or in combination of two or more.
For example, a halide and a non-halide of the butyl rubber are available under the trade name "Exxon Butyl™" (Exxon Butyl is a trademark in Japan, other countries, or both) (ExxonMobil Chemical Co.).
In the rubber composition of the barrier layer in the tire according to the present disclosure, the proportion of the butyl rubber in the rubber component (A) may be adjusted as appropriate. For example, the proportion of the butyl rubber in the rubber component (A) is 50 parts by mass or more, 60 parts by mass or more, 70 parts by mass or more, 80 parts by mass or more, 90 parts by mass or more, or 100 parts by mass, with respect to 100 parts by mass of the rubber component (A). For example, the proportion of the butyl rubber in the rubber component (A) is 100 parts by mass or less, 90 parts by mass or less, 80 parts by mass or less, 70 parts by mass or less, 60 parts by mass or less, or 50 parts by mass or less, with respect to 100 parts by mass of the rubber component (A). In an embodiment, the proportion of the butyl rubber in the rubber component (A) is 70 parts to 100 parts by mass with respect to 100 parts by mass of the rubber component (A).

- Rubber components other than butyl rubber

The rubber component (A) may contain one or more rubber components other than the butyl rubber. Examples of the rubber components other than the butyl rubber include copolymers and terpolymers of nitrile rubber, chloroprene rubber, or isobutylene and at least one other comonomer. Examples of useful comonomers include divinyl aromatic monomers, alkyl substituted vinyl aromatic monomers, and combinations thereof.
Examples of the divinyl aromatic monomers include vinylstyrene.
Examples of the alkyl substituted vinyl aromatic monomers include $\alpha$-methylstyrene and p-methylstyrene.
The foregoing copolymers and terpolymers may be halogenated, e.g. chlorinated or brominated. In an embodiment, a halogenated copolymer or a halogenated terpolymer may be derived from a monomer such as p-bromomethylstyrene.
In an embodiment, the rubber composition of the barrier layer in the tire according to the present disclosure contains one or more selected from the group consisting of a copolymer of isobutylene and p-methylstyrene, a terpolymer of isobutylene, isoprene, and vinylstyrene, a bromide of a copolymer of isobutylene and p-methylstyrene (forming a copolymer having mer units of p-bromomethylstyrenyl), and halides thereof.
In an embodiment, the copolymer of isobutylene and p-methylstyrene may contain 0.5 mass% to 25 mass% or 2 mass% to 20 mass% of p-methylstyrene with respect to the total mass of the copolymer. The balance of the copolymer is isobutylene.
In an embodiment, the copolymer of isobutylene and p-methylstyrene may be halogenated with bromine or the like. In the case where the copolymer of isobutylene and p-methylstyrene is halogenated, the copolymer may contain more than 0 mass% and 10 mass% or less of halogen or 0.3 mass% to 7 mass% of halogen.
In an embodiment, the terpolymer of isobutylene, isoprene, and vinylstyrene may contain 95 mass% to 99 mass% or 96 mass% to 98.5 mass% of isobutylene and 0.5 mass% to 5 mass% or 0.8 mass% to 2.5 mass% of isoprene with respect to the total mass of the terpolymer. The balance of the terpolymer is vinylstyrene.
In the case of the halides, 0.1 mass% to 10 mass%, 0.3 mass% to 7 mass%, or 0.5 mass% to 3 mass% of halogen may be contained with respect to the total mass of the copolymer or the terpolymer.
In the tire according to the present disclosure, the rubber composition preferably contains a bromide of isobutylene-p-methylstyrene copolymer rubber (copolymer of isobutylene and p-methylstyrene). This enhances the adhesiveness to the tire rubber.

For example, a halide and a non-halide of the copolymer of isobutylene and p-methylstyrene are available under the trade name "Exxpro™" (Exxpro is a trademark in Japan, other countries, or both) (ExxonMobil Chemical Co.). For example, the copolymer having mer units of p-bromomethylstyrenyl is available under the trade name "Exxpro 3745" (ExxonMobil Chemical Co.). For example, a halide and a non-halide of the terpolymer of isobutylene, isoprene, and vinylstyrene are available under the trade name "Polysar Butyl™" (Polysar Butyl is a trademark in Japan, other countries, or both) (Lanxess, Germany).

In the rubber composition of the barrier layer in the tire according to the present disclosure, the proportion of one or more selected from the group consisting of a copolymer of isobutylene and p-methylstyrene, a terpolymer of isobutylene, isoprene, and vinylstyrene, a bromide of a copolymer of isobutylene and p-methylstyrene, and halides thereof in the rubber component (A) may be adjusted as appropriate. For example, the proportion in the rubber component (A) is 5 parts by mass or more, 10 parts by mass or more, 20 parts by mass or more, 30 parts by mass or more, 40 parts by mass or more, 50 parts by mass or more, 60 parts by mass or more, 70 parts by mass or more, 80 parts by mass or more, or 90 parts by mass or more, with respect to 100 parts by mass of the rubber component (A). For example, the proportion in the rubber component (A) is 90 parts by mass or less, 80 parts by mass or less, 70 parts by mass or less, 60 parts by mass or less, 50 parts by mass or less, 40 parts by mass or less, 30 parts by mass or less, 20 parts by mass or less, or 10 parts by mass or less, with respect to 100 parts by mass of the rubber component (A).

In an embodiment, the proportion of one or more selected from the group consisting of a copolymer of isobutylene and p-methylstyrene, a terpolymer of isobutylene, isoprene, and vinylstyrene, a bromide of a copolymer of isobutylene and p-methylstyrene, and halides thereof in the rubber component (A) is 20 parts to 30 parts by mass with respect to 100 parts by mass of the rubber component (A).

The rubber components (A) other than the butyl rubber may be used alone or in combination of two or more.

The rubber composition of the barrier layer in the tire according to the present disclosure may contain a filler, an oil, stearic acid, a crosslinking agent, a co-crosslinking agent, and the like.

- Filler

The filler in the barrier layer in the tire according to the present disclosure is not limited, and a publicly known filler may be selected as appropriate and used. Examples of the filler include silica, carbon black, clay, aluminum hydroxide, alumina, talc, mica, kaolin, glass balloons, glass beads, calcium carbonate, magnesium carbonate, magnesium hydroxide, magnesium oxide, titanium oxide, potassium titanate, and barium sulfate.

The fillers may be used alone or in combination of two or more.

As the filler, a laminar or platy clay mineral (B) may be contained.

In the tire according to the present disclosure, the rubber composition preferably contains the laminar or platy clay mineral (B). This can further suppress the transfer of the antioxidant from the rubber of the tire, and further prevent the polyurethane foam layer from discoloring to brown.

The laminar or platy clay mineral (B) preferably has an average aspect ratio of 2 to 200. If the average aspect ratio of the laminar or platy clay mineral (B) is 2 or more, the planes of laminar or platy clay mineral particles are oriented, and the polyurethane foam layer can be further prevented from discoloring to brown. If the average aspect ratio of the laminar or platy clay mineral (B) is 200 or less, the laminar or platy clay mineral (B) is dispersed more uniformly during kneading of the rubber composition, so that the polyurethane foam layer can be further prevented from discoloring to brown. In a preferred embodiment, the average aspect ratio is 3 to 150, 5 to 100, 5 to 50, or 10 to 30, from the viewpoint of preventing the polyurethane foam layer from discoloring to brown. The average aspect ratio is calculated as x/y, where x is the average major axis and y is the average thickness.

In a preferred embodiment, the average particle size (measured by the Malvern method) of the laminar or platy clay mineral (B) is 50 $\mu$m or less, 0.2 $\mu$m to 30 $\mu$m, 0.2 $\mu$m to 5 $\mu$m, or 1.5 $\mu$m to 4.5 $\mu$m. If the average particle size of the laminar or platy clay mineral (B) is 50 $\mu$m or less, the rubber composition has good bending resistance.

As the laminar or platy clay mineral (B), any of a natural product and a synthetic product may be used. Examples of the laminar or platy clay mineral (B) include clays such as kaolin clay, sericite clay, calcined clay, and surface-treated silane-modified clay; smectite clay minerals such as montmorillonite, saponite, hectorite, beidellite, stevensite, and nontronite; and mica, feldspar, vermiculite, halloysite, talc, and swelling mica. Of these, clay, mica, talc, and feldspar are preferable, clay, mica, and talc are more preferable, clay and talc are further preferable, and clay is particularly preferable, from the viewpoint of preventing the polyurethane foam layer from discoloring to brown. Of the clays, kaolin clay is particularly preferable. These laminar or platy clay minerals (B) may be used alone or in combination of two or more.

In a preferred embodiment, the content of the laminar or platy clay mineral (B) in the rubber composition of the barrier layer with respect to 100 parts by mass of the rubber component (A) is 10 parts by mass or more, 15 parts by mass or more, 20 parts by mass or more, or 25 parts by mass or more from the viewpoint of preventing the polyurethane foam layer from discoloring to brown, and 100 parts by mass or less, 80 parts by mass or less, or 60 parts by mass or less from the viewpoint of improving the operability (kneadability) when kneading the rubber composition.

The blending amount of the filler in the rubber composition of the barrier layer in the tire according to the present disclosure is not limited, and may be adjusted as appropriate. For example, the blending amount of the filler in the rubber composition of the barrier layer is 5 parts to 100 parts by mass with respect to 100 parts by mass of the rubber component (A). The blending amount of the filler in the rubber composition of the barrier layer is preferably 30 parts by mass or more with respect to 100 parts by mass of the rubber component (A), from the viewpoint of the operability and forming the rubber composition of the barrier layer into a sheet.

The rubber composition of the barrier layer in the tire according to the present disclosure may further contain a processability improving agent (C). The processability improving agent (C) is a compounding agent having an action of suppressing adhesion to metal parts such as a metal rotor in a kneading facility and improving the processability of the rubber composition.

The processability improving agents (C) may be used alone or in combination of two or more.

In a preferred embodiment, the content of the processability improving agent (C) in the rubber composition of the barrier layer is 0.1 parts to 20 parts by mass or 0.1 parts to 10 parts by mass with respect to 100 parts by mass of the rubber component (A). If the content of the processability improving agent (C) is 0.1 parts by mass or more with respect to 100 parts by mass of the rubber component (A), the adhesion of the rubber composition to metal parts can be further suppressed. If the content of the processability improving agent (C) is 20 parts by mass or less with respect to 100 parts by mass of the rubber component (A), the physical properties (such as storage modulus) of the rubber composition after vulcanization are little affected.

As the processability improving agent (C), a glycerin fatty acid ester composition and a stearylamine derivative are preferable. As a result of a glycerin fatty acid ester composition and/or a stearylamine derivative being used as the processability improving agent (C), the adhesion of the rubber composition to metal parts can be further suppressed.

In the tire according to the present disclosure, the processability improving agent (C) is preferably at least one selected from the group consisting of a glycerin fatty acid ester composition and a stearylamine derivative. Thus, the adhesion of the rubber composition to metal parts can be further suppressed.

The glycerin fatty acid ester composition is a composition containing a glycerin fatty acid ester. The glycerin fatty acid ester is a compound obtained by ester-bonding at least one of three OH groups of glycerin and a COOH group of fatty acid.

The glycerin fatty acid ester may be any of a glycerin fatty acid monoester (monoglyceride) obtained by esterification of one molecule of glycerin and one molecule of fatty acid, a glycerin fatty acid diester (diglyceride) obtained by esterification of one molecule of glycerin and two molecules of fatty acid, a glycerin fatty acid triester (triglyceride) obtained by esterification of one molecule of glycerin and three molecules of fatty acid, and any mixture thereof. The glycerin fatty acid ester is preferably a glycerin fatty acid monoester.

As the glycerin fatty acid ester composition, 1) a glycerin fatty acid monoester alone, 2) a mixture of a glycerin fatty acid monoester and a glycerin fatty acid diester, and 3) a mixture of the foregoing 1) or 2) and a glycerin fatty acid triester or glycerin.

The glycerin fatty acid ester composition preferably contains a glycerin fatty acid monoester. In the case where the glycerin fatty acid ester composition contains a glycerin fatty acid monoester, the adhesion of the rubber composition to metal parts can be further suppressed. In a preferred embodiment, the content of the glycerin fatty acid monoester in the glycerin fatty acid ester composition is 35 mass% to 100 mass%, 50 mass% to 100 mass%, 60 mass% to 99 mass%, or 85 mass% to 98 mass%. The content is preferably 50 mass% to 100 mass% from the viewpoint of production, as the processability of the rubber composition can be further improved.

In a preferred embodiment, the content of the glycerin fatty acid diester in the glycerin fatty acid ester composition is 65 mass% or less, 55 mass% or less, or 50 mass% or less, from the viewpoint of reducing the unvulcanized viscosity of the rubber composition, preventing the polyurethane foam layer from discoloring to brown, and improving the bending resistance.

In a preferred embodiment, the content of the glycerin fatty acid triester in the glycerin fatty acid ester composition may be 10 mass% or less, 5 mass% or less, or 3 mass% or less from the viewpoint of reducing the influence on the physical properties of the rubber composition after vulcanization (such as a decrease in storage modulus), and 0.3 mass% or more from the viewpoint of productivity.

In a preferred embodiment, the fatty acid in the glycerin fatty acid ester has a carbon number of 8 to 28, 8 to 22, 10 to 18, 12 to 18, 14 to 18, or 16 to 18, from the viewpoint of the processability of the rubber composition and preventing the polyurethane foam layer from discoloring to brown. A fatty acid having a carbon number of 8 or more has high affinity with the rubber component (A), and bloom of the glycerin fatty acid ester composition is unlikely to occur. A fatty acid having a carbon number of 28 or less contributes to lower production costs of the glycerin fatty acid ester composition.

The fatty acid may be linear or branched, but is preferably linear. The fatty acid may be a saturated fatty acid or an unsaturated fatty acid, but is preferably a saturated fatty acid. The fatty acid is particularly preferably a linear saturated fatty acid.

Specific examples of the fatty acid include caprylic acid, pelargonic acid, capric acid, lauric acid, myristic acid, palmitic acid, stearic acid, isostearic acid, oleic acid, linoleic acid, linolenic acid, arachic acid, arachidonic acid, and behenic acid. As the fatty acid, lauric acid, myristic acid, palmitic acid, and stearic acid are preferable, and palmitic acid and stearic acid are more preferable.

As the glycerin fatty acid ester, specifically, lauric acid monoglyceride, myristic acid monoglyceride, palmitic acid monoglyceride, and stearic acid monoglyceride are preferable, and palmitic acid monoglyceride and stearic acid monoglyceride are more preferable.

When producing the glycerin fatty acid ester composition, glycerin may remain as an unreacted raw material. In a preferred embodiment, the content of the glycerin in the glycerin fatty acid ester composition may be 10 mass% or less, 5 mass% or less, or 3 mass% or less from the viewpoint of suppressing a decrease in heat resistance, and 0.3 mass% or more from the viewpoint of productivity.

The glycerin fatty acid ester composition can be produced by an esterification method of producing from glycerin and a fatty acid, a transesterification method using fats and oils and glycerin as raw materials, or the like. Examples of production methods whereby the amount of monoester in the glycerin fatty acid ester composition is controlled include the following methods 1) to 3).

1) A method of controlling the equilibrium composition of esterification by changing the charging ratio of the fatty acid component and the glycerin component in the esterification method, the transesterification method, or the like. Glycerin can be further removed by distillation. In view of the reaction characteristics, the upper limit of the amount of glycerin fatty acid monoester is considered to be about 65 mass%.
2) A method of further fractionally distilling, by molecular distillation or the like, a reaction product obtained by the esterification method or the transesterification method to extract a glycerin fatty acid ester composition having high monoester purity (typically 95 mass% or more).
3) A method of mixing the glycerin fatty acid ester composition obtained by the method 2) with the glycerin fatty acid ester composition obtained by the method 1) at any proportion to obtain a glycerin fatty acid ester composition containing approximately 65 mass% to 95 mass% of a monoester.

By using natural product-derived oil and fat, fatty acid, etc. as the raw material, a glycerin fatty acid ester with reduced environmental load, etc. can be used.

The raw material of the fatty acid may be obtained by hydrolyzing an oil and fat such as a vegetable oil and fat or an animal oil and fat, or obtained by curing and anti-curing such an oil and fat or hydrolyzed fatty acid. The oil and fat raw material is not limited, but a vegetable oil and fat, an animal oil and fat, etc. are used. Specifically, palm oil, soybean oil, olive oil, cottonseed oil, coconut oil, palm kernel oil, beef tallow, lard, fish oil, and the like may be used.

As the glycerin fatty acid ester composition, a commercial product whose monoester amount is controlled can be used. Examples of the commercial product include stearic acid monoglyceride (e.g. RHEODOL MS-60, EXCEL S-95 produced by Kao Corporation).

The monoglyceride content (glycerin fatty acid monoester content) in the glycerin fatty acid ester composition is calculated by GPC analysis (gel permeation chromatography) according to the following formula (I), and denotes the area proportion of monoglyceride in GPC analysis to the total of glycerin, monoglyceride, diglyceride (glycerin fatty acid diester), and triglyceride (glycerin fatty acid triester).

$$\text{Monoglyceride content (area\%)} = MG/(G + MG + DG + TG) \times 100 \tag{I,}$$

where G is the glycerin area of GPC, MG is the monoglyceride area of GPC, DG is the diglyceride area of GPC, and TG is the triglyceride area of GPC.

The GPC measurement conditions are as follows.

<GPC measurement conditions>

GPC measurement is performed using the following measurement device. Tetrahydrofuran (THF) as an eluent is flown at a flow rate of 0.6 mL/min, the column is stabilized in a thermostatic oven of 40 °C, and 10 $\mu$L of a sample solution of 1 mass% dissolved in THF is injected therein to perform measurement.

Standard substance: monodisperse polystyrene.

Detector: RI-8022 (produced by Tosoh Corporation).

Measurement device: HPLC-8220 GPC (produced by Tosoh Corporation).

Analytical column: two columns of TSK-GEL SUPER HI000 and two columns of TSK-GEL SUPER H2000 connected in series (produced by Tosoh Corporation).

Likewise, the diglyceride content in the glycerin fatty acid ester composition denotes the area proportion of diglyceride in GPC analysis to the total of glycerin, monoglyceride, diglyceride, and triglyceride. The triglyceride content in the glycerin fatty acid ester composition denotes the area proportion of triglyceride in GPC analysis to the total of glycerin, monoglyceride, diglyceride, and triglyceride.

Examples of the glycerin fatty acid ester composition whose monoglyceride content is controlled include a glyceryl caprylate-containing composition having a carbon number of 8 of fatty acid, a glyceryl decanoate-containing composition having a carbon number of 10 of fatty acid, a glyceryl laurate-containing composition having a carbon number of 12 of fatty acid, a glyceryl myristate-containing composition having a carbon number of 14 of fatty acid, a glyceryl palmitate-containing composition having a carbon number of 16 of fatty acid, a glyceryl stearate-containing composition having a carbon number of 18 of fatty acid, a glyceryl behenate-containing composition having a carbon number of 22 of fatty acid, and a glyceryl montanate-containing composition having a carbon number of 28 of fatty acid. Of these, a glyceryl laurate-containing composition, a glyceryl palmitate-containing composition, and a glyceryl stearate-containing composition are preferable. One or more of these glycerin fatty acid ester compositions whose monoester amount is controlled are freely selected and blended.

The glycerin fatty acid ester composition is preferably composed of a glycerin fatty acid ester. Preferably, the glycerin fatty acid ester is an ester of glycerin and two or more fatty acids, a fatty acid component of the largest amount from among the two or more fatty acids constituting the glycerin fatty acid ester is 10 mass% to 90 mass% with respect to the total fatty acids, and 50 mass% to 100 mass% of a monoester component is further contained with respect to the glycerin fatty acid ester. Herein, a fatty acid component is regarded as one component for each fatty acid equal in the configuration and the bonding state in addition to the number of alkyl carbons, i.e. for each stereoisomer. For example, n-1-octadecanoic acid (typical linear stearic acid), 2-octyl-1-decanoic acid (2-position branched stearic acid), cis-9-octadecenoic acid (typical oleic acid), cis,cis-9,12-octadecadienoic acid (typical linoleic acid), etc. are considered as separate components, even though they are fatty acids having the same carbon number of 18.

In a preferred embodiment, regarding the mass ratio of the two or more fatty acids, even the fatty acid component of the largest amount has a mass ratio of 10 mass% to 90 mass% with respect to the total fatty acids, and the mass ratio is 15 mass% to 80 mass%, 20 mass% to 70 mass%, or 30 mass% to 60 mass% from the viewpoint of further improving the processability of the rubber composition.

More preferably, of the two or more fatty acids as the raw material of the glycerin fatty acid ester, one of the fatty acid component of the largest amount and the fatty acid component of the second largest amount is a fatty acid having a carbon number of 16 and the other one of the fatty acid component of the largest amount and the fatty acid component of the second largest amount is a fatty acid having a carbon number of 18. In a preferred embodiment, in the case where the glycerin fatty acid ester is an ester of glycerin and a fatty acid having a carbon number of 16 and a fatty acid having a carbon number of 18, the mass ratio of the fatty acid having a carbon number of 16 and the fatty acid having a carbon number of 18 ([the fatty acid having a carbon number of 16]/[fatty acid having a carbon number of 18]) is in a range of 90/10 to 10/90, in a range of 80/20 to 20/80, or in a range of 75/25 to 25/75. If the mass ratio of the fatty acid having a carbon number of 16 and the fatty acid having a carbon number of 18 is in such a range, the processability of the rubber composition can be further improved.

The content (mass%) of each fatty acid component is measured by subjecting the glycerin fatty acid ester to saponification and methyl esterification according to a standard oil and fat analysis test method established by the Japan Oil Chemists' Society and performing GPC analysis.

The glycerin fatty acid ester composition preferably contains a glycerin fatty acid monoester and a glycerin fatty acid diester where the content of the glycerin fatty acid monoester in the glycerin fatty acid ester composition is 35 mass% or more, or the content of the glycerin fatty acid diester in the glycerin fatty acid ester composition is 65 mass% or less. Such a glycerin fatty acid ester composition can improve the bending resistance of the rubber composition.

In a preferred embodiment, the content of the glycerin fatty acid ester composition with respect to 100 parts by mass of the rubber component (A) is 0.5 parts by mass or more, 1 part by mass or more, 2 parts by mass or more, or 3 parts by mass or more from the viewpoint of the processability of the rubber composition (suppressing adhesion to metal parts), preventing the polyurethane foam layer from discoloring to brown, and the bending resistance, and 20 parts by mass or less, 15 parts by mass or less, 12 parts by mass or less, 11 parts by mass or less, or 10 parts by mass or less from the viewpoint of reducing the influence on the physical properties (such as storage modulus) of the rubber composition after vulcanization. In another preferred embodiment, the content of the glycerin fatty acid ester composition is 0.5 parts to 20 parts by mass, 1 part to 15 parts by mass, 2 parts to 12 parts by mass, 3 parts to 11 parts by mass, or 3 parts to 10 parts by mass, with respect to 100 parts by mass of the rubber component (A).

In a preferred embodiment, the content of the glycerin fatty acid ester composition with respect to 100 parts by mass of the laminar or platy clay mineral (B) is 0.1 parts by mass or more, 0.25 parts by mass or more, 0.5 parts by mass or more, or 1 part by mass or more from the viewpoint of the processability of the rubber composition (suppressing adhesion to metal parts), and 20 parts by mass or less, 15 parts by mass or less, 12 parts by mass or less, 10 parts by mass or less, 8 parts by mass or less, or 7 parts by mass or less from the viewpoint of reducing the influence on the physical properties (such as storage modulus) of the rubber composition after vulcanization. In another preferred embodiment, the content of the glycerin fatty acid ester composition is 0.1 parts to 20 parts by mass, 0.25 parts to 15 parts by mass, 0.25 parts to 10 parts by mass, 0.5 parts to 8 parts by mass, or 1 part to 7 parts by mass, with respect to 100 parts by mass of the laminar or platy clay mineral (B).

In a preferred embodiment, the content of the glycerin fatty acid triester in the rubber composition according to the present disclosure with respect to 100 parts by mass of the rubber component (A) may be 0.5 parts by mass or less, 0.3 parts by mass or less, or 0.1 parts by mass or less from the viewpoint of reducing the influence on the physical properties (such as storage modulus) of the rubber composition after vulcanization, and 0.01 parts by mass or more from the viewpoint of productivity.

In a preferred embodiment, the content of the glycerin in the rubber composition according to the present disclosure with respect to 100 parts by mass of the rubber component (A) may be 0.5 parts by mass or less, 0.3 parts by mass or less, or 0.1 parts by mass or less from the viewpoint of suppressing a decrease in heat resistance, and 0.01 parts by mass or more from the viewpoint of productivity.

The stearylamine derivative is a derivative of stearylamine, and is preferably a compound obtained by substituting hydrogen of an amino group of stearylamine with an alkyl group. Examples of the alkyl group include a methyl group, an ethyl group, a propyl group, and a butyl group.

Specific examples of the stearylamine derivative include dimethyl stearylamine, diethyl stearylamine, dipropyl stearylamine, ethylmethylstearylamine, ethylpropylstearylamine, and methylpropylstearylamine. Of these, dimethylstearylamine is preferable.

In a preferred embodiment, the content of the stearylamine derivative is 0.1 parts to 10 parts by mass, 0.2 parts to 5 parts by mass, or 0.5 parts to 2 parts by mass, with respect to 100 parts by mass of the rubber component (A). If the content of the stearylamine derivative is 0.1 parts by mass or more with respect to 100 parts by mass of the rubber component (A), the adhesion of the rubber composition to metal parts can be further suppressed. If the content of the stearylamine derivative is 10 parts by mass or less with respect to 100 parts by mass of the rubber component (A), the physical properties of the rubber composition after vulcanization (such as storage modulus) are little affected.

In an embodiment, the rubber composition of the barrier layer does not contain stearic acid (D), or contains 0.1 parts by mass or less of the stearic acid (D) with respect to 100 parts by mass of the rubber component (A). If the stearic acid (D) is not contained or the content of the stearic acid (D) is 0.1 parts by mass or less, the aggregation of the laminar or platy clay mineral (B) can be suppressed to improve the dispersibility of the laminar or platy clay mineral (B), with it being possible to further prevent the polyurethane foam layer from discoloring to brown.

In a preferred embodiment, the content of the stearic acid (D) is 0.05 parts by mass or less or 0.02 parts by mass or less, with respect to 100 parts by mass of the rubber component (A). In another preferred embodiment, the stearic acid (D) is not contained. When the content of the stearic acid (D) is lower, the polyurethane foam layer can be further prevented from discoloring to brown, and the barrier layer can be bonded to the sidewall rubber more easily. In the case where the rubber composition does not contain the stearic acid (D), the polyurethane foam layer can be even further prevented from discoloring to brown, and the barrier layer can be bonded to the sidewall rubber more easily. Without wishing to be bound by theory, it is presumed that, as a result of the stearic acid (D) not being contained or the content of the stearic acid (D) being 0.1 parts by mass or less, the pH of the rubber composition increases, which suppresses the aggregation of the laminar or platy clay mineral (B).

In the tire according to the present disclosure, preferably, the rubber composition contains the laminar or platy clay mineral (B) and at least one of the processability improving agent (C) and an unsaturated carboxylic acid metal salt (E), and the rubber composition does not contain the stearic acid (D) or contains 0.1 parts by mass or less of the stearic acid (D) with respect to 100 parts by mass of the rubber component (A). Thus, the polyurethane foam layer can be further prevented from discoloring to brown. Moreover, the adhesiveness to metal parts is low, and the barrier layer can be easily bonded to the sidewall rubber.

The tire according to the present disclosure preferably contains the processability improving agent (C) and the unsaturated carboxylic acid metal salt (E). Thus, the adhesion of the rubber composition to metal parts can be further suppressed.

The unsaturated carboxylic acid metal salts (E) may be used alone or in combination of two or more.

Examples of an unsaturated carboxylic acid forming the unsaturated carboxylic acid metal salt (E) include α,β-ethylenic unsaturated carboxylic acids such as acrylic acid, methacrylic acid, ethacrylic acid, crotonic acid, angelic acid, and cinnamic acid. Of these, acrylic acid and methacrylic acid are preferable as the unsaturated carboxylic acid.

The unsaturated carboxylic acid metal salt (E) is preferably at least one selected from the group consisting of an acrylic acid metal salt and a methacrylic acid metal salt. Thus, the polyurethane foam layer can be further prevented from discoloring to brown.

Examples of a metal forming the unsaturated carboxylic acid metal salt (E) include sodium, potassium, lithium, calcium, barium, magnesium, zinc, aluminum, tin, zirconium, and cadmium. Of these, as the metal, sodium, magnesium, zinc, and aluminum are preferable, and zinc is particularly preferable. That is, as the unsaturated carboxylic acid metal salt (E), unsaturated zinc carboxylate is preferable.

Specific examples of the unsaturated carboxylic acid metal salt (E) include zinc diacrylate, zinc dimethacrylate, zinc monoacrylate, zinc monomethacrylate, magnesium diacrylate, magnesium dimethacrylate, magnesium monoacrylate, and magnesium monomethacrylate.

The unsaturated carboxylic acid metal salt (E) is preferably at least one selected from the group consisting of zinc dimethacrylate and zinc monomethacrylate. As a result of the rubber composition containing zinc dimethacrylate and/or zinc monomethacrylate, the polyurethane foam layer can be further prevented from discoloring to brown.

In a preferred embodiment, the content of the unsaturated carboxylic acid metal salt (E) is 0.1 parts to 3.8 parts by mass, 0.2 parts to 3 parts by mass, or 0.3 parts to 2 parts by mass, with respect to 100 parts by mass of the rubber component (A). If the content is 0.1 parts by mass or more, the polyurethane foam layer can be further prevented from discoloring to brown. If the content is 3.8 parts by mass or less, rubber burning (scorch) of the rubber composition can be sufficiently suppressed.

In a preferred embodiment, the proportion of the content of the unsaturated carboxylic acid metal salt (E) to the content of the laminar or platy clay mineral (B) is 0.1 mass% to 38 mass%, 0.2 mass% to 30 mass%, or 0.5 mass% to 10 mass%. If the proportion is in a range of 0.1 mass% to 38 mass%, the laminar or platy clay mineral (B) and the unsaturated carboxylic acid metal salt (E) can be efficiently coupled, and the polyurethane foam layer can be further prevented from discoloring to brown.

The content of the antioxidant in the barrier layer is preferably 0.2 parts by mass or less with respect to 100 parts by mass of the rubber component (A).

The shape and the size of the barrier layer are not limited, and may be adjusted as appropriate depending on the shape and the size of the polyurethane foam layer. The area of the barrier layer may be greater than or equal to the area of the polyurethane foam layer. To prevent the antioxidant from transferring into the polyurethane foam layer from an edge of the plane of the polyurethane foam layer, it is preferable that the area of the barrier layer is greater than the area of the polyurethane foam layer and the polyurethane foam layer is located within the surface of the barrier layer.

The thickness of the barrier layer is not limited, and may be adjusted as appropriate. The thickness of the barrier layer is preferably 0.1 mm to 2 mm and more preferably 0.3 mm to 1mm, from the viewpoint of suppressing the transfer of the antioxidant by the barrier layer and reducing the weight of the barrier layer.

The barrier layer may be formed by vulcanization. The method of placing the barrier layer between the polyurethane foam layer and the outer layer of the tire is not limited. Examples of the method include the following (1) to (6):

(1) a method by which the polyurethane foam layer and the rubber composition of the unvulcanized barrier layer are placed on the outside of the molded unvulcanized tire and vulcanized;
(2) a method by which the polyurethane foam layer and the rubber composition of the unvulcanized barrier layer are placed on the outside of the vulcanized tire and vulcanized;
(3) a method by which a laminated body of the polyurethane foam layer and the rubber composition of the unvulcanized barrier layer is vulcanized beforehand and the vulcanized laminated body is placed on the outside of the molded unvulcanized tire and vulcanized;
(4) a method by which a laminated body of the polyurethane foam layer and the rubber composition of the unvulcanized barrier layer is vulcanized beforehand and the vulcanized laminated body is placed on the outside of the vulcanized tire and vulcanized;
(5) a method by which the polyurethane foam layer and the rubber composition of the vulcanized barrier layer are placed on the outside of the molded unvulcanized tire and vulcanized; and
(6) a method by which the polyurethane foam layer and the rubber composition of the vulcanized barrier layer are placed on the outside of the vulcanized tire and vulcanized.

With the methods (1) to (6), the polyurethane foam layer is laminated on the outer layer of the tire with the barrier layer therebetween. With the methods (2) to (6), an adhesive or cement rubber may be interposed between the structures. The method (1) is preferable from the viewpoint of the adhesiveness and suppressing degradation caused by revulcanization.

<Polyurethane foam layer>

The polyurethane foam layer is a layer containing a polyurethane foam. The polyurethane foam has a function of imparting ozone crack resistance to the tire because urethane does not have an unsaturated bond in a molecular chain.

- Polyurethane foam

The polyurethane foam is not limited, and a publicly known polyurethane foam may be used. For example, the polyurethane foam may be obtained by foaming a polyurethane resin using a foaming agent or the like.

Examples of the polyurethane resin include a urethane resin formed from a polyol and a polyisocyanate.

Examples of the polyol include a low-molecular polyol and a high-molecular polyol. These polyols may be used alone or in combination of two or more.

Examples of the low-molecular polyol include ethylene glycol, propylene glycol, 1,4-butanediol, glycerol, trimethylolpropane, 1,2,6-hexanetriol, erythritol, and sorbitol.

Examples of the high-molecular polyol include a polyether-based polyol and a polyester-based polyol.

Examples of the polyether-based polyol include polyoxyalkylene-polyols such as polyoxyethylene glycol, polyoxyethylene glyceryl ether, polyoxyethylene trimethylolpropane ether, polyoxyethylene sorbitol ether, polyoxypropylene bisphenol A ether, polyoxypropylene glycol, polyoxypropylene glyceryl ether, polyoxypropylene trimethylolpropane ether, polyoxypropylene sorbitol ether, polyoxyethylene-polyoxypropylene glycol, polyoxyethylene-polyoxypropylene glyceryl ether, polyoxyethylene-polyoxypropylene trimethylolpropane ether, polyoxyethylene-polyoxypropylene sorbitol ether, and polyoxyethylene-polyoxypropylene bisphenol A ether.

Examples of the polyester-based polyol include polyethylene adipate polyol, polybutylene adipate polyol, polyethylene-butylene adipate polyol, and polyethylene terephthalate polyol.

These low-molecular polyols and high-molecular polyols may be used alone or in combination of two or more.

Examples of the polyisocyanate include 4,4'-diphenylmethane diisocyanate (MDI), tolylene diisocyanate (TDI), dicyclohexylmethane diisocyanate, xylene diisocyanate, hexamethylene diisocyanate, isophorone diisocyanate, o-toluidine diisocyanate, naphthylene diisocyanate, xylylene diisocyanate, lysine diisocyanate, and polymethylene polyphenylene polyisocyanate. These polyisocyanates may be used alone or in combination of two or more.

The polyurethane foam may be any of a flexible foam, a semi-rigid foam, and a rigid foam.

The cell structure of the polyurethane foam is not limited, and may be any of a closed cell structure, an open cell structure, and a cell structure (hereafter simply referred to as "mixed cell structure") in which a closed cell structure and an open cell structure are mixed. The cell structure of the polyurethane foam is more preferably a closed cell structure, from the viewpoint of impregnation with substances such as a binder and carbon black.

The cell diameter of the polyurethane foam may be adjusted as appropriate, and is, for example, 250 $\mu$m or more and 10 mm or less. The cell diameter is calculated after measuring the number of cells (per 25 mm) in accordance with JIS K6400-1: 2004 Appendix 1.

In one embodiment, the cell diameter of the polyurethane foam is 10 mm or less, 5 mm or less, 3 mm or less, 1 mm or less, 900 $\mu$m or less, 800 $\mu$m or less, 700 $\mu$m or less, 600 $\mu$m or less, 500 $\mu$m or less, 450 $\mu$m or less, 400 $\mu$m or less, 350 $\mu$m or less, 300 $\mu$m or less, 250 $\mu$m or less, 200 $\mu$m or less, 150 $\mu$m or less, or 100 $\mu$m or less. In another embodiment, the cell diameter of the polyurethane foam is 250 $\mu$m or more, 300 $\mu$m or more, 350 $\mu$m or more, 400 $\mu$m or more, 500 $\mu$m or more, 600 $\mu$m or more, 700 $\mu$m or more, 800 $\mu$m or more, 900 $\mu$m or more, 1 mm or more, 3 mm or more, or 5 mm or more.

The air permeability of the polyurethane foam may be adjusted as appropriate, and is for example 30 cc/cm$^2$/sec to 500 cc/cm$^2$/sec, preferably 30 cc/cm$^2$/sec to 200 cc/cm$^2$/sec, and more preferably 60 cc/cm$^2$/sec to 150 cc/cm$^2$/sec, for a thickness of 2 mm. The air permeability is measured in accordance with JIS K6400-7: 2012. In one embodiment, the air permeability (cc/cm$^2$/sec) of the polyurethane foam is 30 or more or 60 or more, and 500 or less, 200 or less, 150 or less, or 100 or less.

In the tire according to the present disclosure, the air permeability of the polyurethane foam is preferably 30 cc/cm$^2$/sec to 500 cc/cm$^2$/sec for a thickness of 2 mm. As a result of the air permeability being 30 cc/cm$^2$/sec or more, the impregnation with the binder and particles is enhanced. As a result of the air permeability being 500 cc/cm$^2$/sec or less, the balance of the crack resistance of the tire is improved.

The thickness of the polyurethane foam is typically the same as or substantially the same as the thickness of the polyurethane foam layer. The thickness of the polyurethane foam may be adjusted as appropriate, and is for example 0.5 mm to 50 mm and preferably 1 mm to 20 mm.

As the polyurethane foam, a commercial product may be used. Examples of commercially available polyurethane foams include "EVERLIGHT®" series (EVERLIGHT is a registered trademark in Japan, other countries, or both) such as "EVERLIGHT® HZCD", "EVERLIGHT® HZ", "EVERLIGHT® CD", "EVERLIGHT® HR", and "EVERLIGHT® ZC" produced by Bridgestone Chemitech Co., Ltd.

- Binder

In the tire according to the present disclosure, preferably, the binder is bonded to the polyurethane foam. Thus, the moist heat resistance of the polyurethane foam layer can be improved, and the tire can keep luster.

The binder is not limited, and a publicly known binder may be used. Examples of the binder include acrylic resin, urethane-based resin, fluorine-based resin, polyvinyl alcohol, polyacrylamide, polyvinyl chloride resin, vinyl acetate resin, butadiene resin, epoxy resin, alkyd resin, melamine resin, and chloroprene rubber. These binders may be used alone or in combination of two or more.

Examples of the acrylic resin include acryl resin, polyacrylic ester resin, acrylic acid-styrene copolymer resin, and acrylic acid-vinyl acetate copolymer resin.

In one embodiment, the binder is one or more selected from the group consisting of a urethane-based resin, an acrylic resin, and a fluorine-based resin.

In the tire according to the present disclosure, preferably, the binder is bonded to the polyurethane foam in the polyurethane foam layer, and the binder is one or more selected from the group consisting of a urethane-based resin and an acrylic resin.

This further improves the appearance of the tire.

In the case of using the binder, a material obtained by combining the solution of the binder with the below-described design substance, for example, an acrylic resin-based paint, may be used.

The amount of the binder is not limited, and may be adjusted as appropriate. For example, the amount of the binder is 12 parts to 90 parts by mass with respect to 100 parts by mass of the polyurethane foam.

The method of bonding the binder to the polyurethane foam is not limited, and may be selected as appropriate. A foaming stock solution before foaming of the polyurethane foam may be mixed with the binder and foamed, to bond the binder to the polyurethane foam. Alternatively, the binder may be brought into contact with the polyurethane foam after foaming, to bond the binder to the polyurethane foam.

In the case of bringing the binder into contact with the polyurethane foam after foaming, for example, the binder may be bonded to the polyurethane foam (e.g. the wall surfaces of cells) by applying pressure to the polyurethane foam after foaming of any shape, such as a sheet shape or a disc shape, to compress the polyurethane foam, immersing the compressed polyurethane foam in a solution of the binder, releasing the pressure to expand the polyurethane foam in the solution of the binder, and then drying the result, thus impregnating the cells of the polyurethane foam with the binder. Alternatively, the binder may be bonded to the polyurethane foam (e.g. the wall surfaces of cells) by immersing the polyurethane foam of any shape, such as a sheet shape or a disc shape, in a solution of the binder, optionally performing application of pressure to and releasing of the pressure from the immersed polyurethane foam one or more times to impregnate the cells of the polyurethane foam with the binder and bring them in contact with each other, and then drying the result.

- Design substance

In the present disclosure, the term "design substance" denotes a substance that can contribute to improved appearance or design of the tire.

In the tire according to the present disclosure, the polyurethane foam layer preferably contains a design substance.

This enhances the design of the tire.

In the present disclosure, the expression "the polyurethane foam layer contains a design substance" indicates that it suffices for the polyurethane foam layer to contain a design substance, and includes, for example, both the case where the polyurethane foam layer obtained by adding the design substance to the foaming stock solution before foaming of the polyurethane foam and foaming the polyurethane foam contains the design substance in at least one part thereof (e.g. the surface of the polyurethane foam, inside the cells, etc.) and the case where, as a result of the polyurethane foam after foaming being brought into contact with the design substance, the polyurethane foam layer contains the design substance in at least one part thereof (e.g. the surface of the polyurethane foam, inside the cells, etc.) In the latter case, it suffices that the design substance is in contact with at least part of the polyurethane foam. For example, the design substance may be supported in the cells of the polyurethane foam via the binder, or the design substance may be supported in the cells of the polyurethane foam without the binder being interposed therebetween.

In the tire according to the present disclosure, preferably, the binder is bonded to the polyurethane foam and the design substance is supported by the polyurethane foam via the binder in the polyurethane foam layer. This makes it possible to maintain excellent appearance of the tire for a longer time.

To support the design substance by the polyurethane foam via the binder, for example, the above-described method of applying pressure to the polyurethane foam after foaming to compress the polyurethane foam, immersing the compressed polyurethane foam in a solution containing the binder and the design substance, releasing the pressure to expand the polyurethane foam in the solution, and then drying the result or method of applying the solution of the binder mixed with the design substance to the polyurethane foam after foaming and drying the result may be used.

The design substance is not limited, as long as it is a component that contributes to improved appearance or design of the tire. One design substance may be used, or two or more design substances may be used in combination.

In the tire according to the present disclosure, the design substance is preferably selected from the group consisting of carbon black, a pigment, metal fine particles, a luminous powder, a fluorescent powder, retroreflective particles, color flop particles, and a chromic material.

This further improves the appearance of the tire.

- Carbon black

When carbon black is used as the design substance, discoloration of the polyurethane foam layer due to aging, e.g. discoloration to yellow, can be suppressed, and the tire can be maintained in black color over a long time. Even when small cracks occur in the polyurethane foam layer laminated on the outer layer of the tire, such cracks are not noticeable. The tire thus has excellent appearance. In the present disclosure, the carbon black is not included in pigments.

The carbon black is not limited, and a publicly known carbon black may be used. Examples of the carbon black include FEF, SRF, HAF, ISAF, and SAF grade carbon blacks.

In the tire according to the present disclosure, the carbon black is preferably one or more selected from the group consisting of furnace blacks.

This improves the appearance of the tire while maintaining high crack resistance.

In the case of using the carbon black as the design substance, the particle diameter of the carbon black is not limited, and may be adjusted as appropriate. For example, the particle diameter of the carbon black is 10 nm to 400 nm.

In the case of using the carbon black as the design substance, the cell diameter of the polyurethane foam is preferably 500 $\mu$m or less. This further enhances the yellowing resistance and ozone crack resistance of the polyurethane foam. In the case of using the carbon black as the design substance, the cell diameter of the polyurethane foam is more preferably 450 $\mu$m or less, 400 $\mu$m or less, or 300 $\mu$m or less.

- Pigment

When a pigment is used as the design substance, the color of the polyurethane foam layer can be set to various colors, so that the design of the tire is further enhanced.

The pigment is not limited, and a publicly known pigment may be used. Examples of the pigment include an inorganic pigment and an organic pigment.

Examples of the inorganic pigment include zinc oxide, zinc dust, lead suboxide, aluminum pigment, lead monoxide, micaceous iron oxide pigment, basic lead chromate, basic lead carbonate, red lead, white lead, chrome yellow, ochre, kaolin, clay, ultramarine blue pigment, graphite, gohun, iron blue pigment, iron oxide pigment, brown iron oxide, lead cyanamide, limestone powder, zinc chromate, talc, zinoko, precipitated calcium carbonate, precipitated barium sulphate, yellow iron oxide, black iron oxide, tonoko, titanium dioxide, whiting, baryta powder, red iron oxide, and litharge.

Examples of the organic pigment include azo-based pigments such as soluble azo red, monoazo yellow, monoazo red, disazo yellow, disazo orange, and condensed azo pigment; and phthalocyanine-based pigments such as copper phthalocyanine blue, copper phthalocyanine green, and cobalt phthalocyanine blue.

The particle diameter of the pigment is not limited, and may be adjusted as appropriate. For example, the particle diameter of the pigment is 50 nm to 180 nm.

- Metal fine particles

When metal fine particles are used as the design substance, for example, the polyurethane foam layer can exhibit a metallic color or change the color tone depending on the thickness, so that the design of the tire is further enhanced.

Examples of the metal of the metal fine particles include gold, silver, copper, aluminum, chromium, molybdenum, nickel, iron, zinc, titanium, platinum, palladium, rhodium, iridium, ruthenium, and osmium.

As the metal fine particles, for example, the metal nanoparticles described in JP 2017-128469 A, WO 2013/039180 A1, and the like may be used.

- Luminous powder

When a luminous powder is used as the design substance, for example, a luminescence phenomenon in which the polyurethane foam layer emits light at night or the like can be achieved, so that the design of the tire is further enhanced.

The luminous powder is not limited, and a publicly known luminous powder may be used. Examples of the luminous powder include composition formulae: $SrAl_2O_4$: Eu,Dy, $Sr_4Al_{14}O_{25}$: Eu,Dy, $SrAl_2O_4$: Eu,Dy+$Sr_4Al_{14}O_{25}$: Eu,Dy, $Sr_4Al_{l4}O_{25}$: Eu,Dy+$CaAl_2O_4$: Eu,Nd, $CaAl_2O_4$: Eu,Nd, ZnS: Cu,Mn,Co, and ZnS: Cu.

Examples of commercially available luminous powders include light yellow-green light emission pigments such as G series and blue-green light emission pigments such as BG series produced by Nemoto & Co., Ltd.

- Fluorescent powder

When a fluorescent powder is used as the design substance, for example, a luminescence phenomenon in which the polyurethane foam layer emits ultraviolet light can be achieved, so that the design of the tire is further enhanced. In addition, even under weak visible light situations such as dawn, dusk, cloudiness, fog, and rainy weather, the fluorescent powder emits ultraviolet light, and thus provides excellent visibility. Since the tire is more visible to pedestrians, drivers of other vehicles, and so on, safety can be improved.

The fluorescent powder is not limited, and a publicly known fluorescent powder may be used. Examples of the fluorescent powder include the fluorescent pigments described in JP 2011-140585 A and JP 2005-314540 A.

- Retroreflective particles

When retroreflective particles are used as the design substance, for example, light incident on the polyurethane foam layer from a light source can be reflected to the light source, so that the design of the tire is further enhanced.

The retroreflective particles are not limited, and publicly known retroreflective particles may be used. Examples of the retroreflective particles include titanium barium-based glass.

Commercially available retroreflective particles include, for example, UB series such as "UB-052NH", "UB-12NH", "UB-23NH", "UB-34NH", and "UB-45NH" produced by Unitika Ltd.

- Color flop particles

In the present disclosure, the term "color flop particles" denotes particles having a property of changing the color tone depending on the angle or the distance. When color flop particles are used as the design material, for example, the color tone of the tire changes depending on the angle at which the tire is seen or the distance from the tire, so that the design of the tire is further enhanced.

The color flop particles are not limited, and publicly known color flop particles may be used. Examples of the color flop particles include the interference metal pigment described in JP 2012-031232 A.

Commercially available color flop particles include, for example, interference color aluminum pigment "CHROMASHINE®" produced by Toyo Aluminium K.K. (CHROMASHINE is a registered trademark in Japan, other countries, or both).

- Chromic material

In the present disclosure, the term "chromic material" denotes, for example, a material that changes in color or develops color in response to an external stimulus such as temperature, moisture, or light (e.g. ultraviolet light). When a chromic material is used as the design substance, for example, the color changes or develops in response to the foregoing external stimulus, so that the design of the tire is further enhanced.

The chromic material is not limited, and a publicly known chromic material may be used. Examples of the chromic material include thermosensitive materials (thermochromic materials) such as the reversible thermochromic microcapsule pigment described in JP 2009-019195 A, hydrochromic materials such as the low-refractive-index pigment and the transparent metal glossy pigment described in JP 2010-208040 A, and photochromic materials such as the organic photochromic compound described in JP 2004-255041 A.

In the tire according to the present disclosure, preferably, the cell diameter of the polyurethane foam is 500 $\mu$m or less, and the design substance is selected from the group consisting of carbon black, a pigment, metal fine particles, a luminous powder, a fluorescent powder, retroreflective particles, color flop particles, and a chromic material.

This further improves the appearance of the tire.

In the tire according to the present disclosure, preferably, the cell diameter of the polyurethane foam is 500 $\mu$m or more, and the design substance is selected from the group consisting of a pigment, metal fine particles, a luminous powder, a fluorescent powder, retroreflective particles, color flop particles, and a chromic material.

This further enhances the design of the tire.

In one embodiment, the cell diameter of the polyurethane foam is more than 500 $\mu$m, and the design substance is selected from the group consisting of a pigment, metal fine particles, a luminous powder, a fluorescent powder, retroreflective particles, color flop particles, and a chromic material.

In the tire according to the present disclosure, preferably, the polyurethane foam layer contains a design substance, the design substance contains particles, and the maximum diameter of the particles is 250 $\mu$m or less. The maximum diameter of the particles is more preferably 100 $\mu$m or less.

This further improves the appearance of the tire.

The particles contained in the design substance may be one or more selected from the group consisting of carbon black, a pigment, metal fine particles, a luminous powder, a fluorescent powder, retroreflective particles, color flop particles, and a chromic material.

The amount of the design substance is not limited, and may be adjusted as appropriate. For example, the amount of the design substance is 1 part to 100 parts by mass or 5 parts to 435 parts by mass with respect to 100 parts by mass of the binder.

<Other components>

The polyurethane foam layer may contain, in addition to the foregoing components, a catalyst, an antifoaming agent, a foaming agent, a surfactant, a curing agent, and the like within the range not inconsistent with the gist of the present disclosure.

(Method of preparing polyurethane foam layer)

The method of preparing the polyurethane foam layer is not limited. For example, a foaming stock solution containing a polyol and a polyisocyanate and optionally containing a catalyst, an antifoaming agent, a foaming agent, a design substance, a binder, and the like may be foamed to obtain a polyurethane foam. The method of foaming the foaming stock solution to obtain the polyurethane foam is not limited, and, for example, a publicly known method such as the method described in JP 2011-079232 A may be used.

Alternatively, the polyurethane foam layer may be prepared by bringing a solution containing a binder and a design substance into contact with a polyurethane foam after foaming to bond the binder to the polyurethane foam, as mentioned above.

In the tire according to the present disclosure, the polyurethane foam layer is laminated on the outer layer of at least part of the tire with the barrier layer therebetween. For example, the polyurethane foam layer may be laminated on the outer layer of a sidewall portion, a tread portion, or the like of the tire with the barrier layer therebetween. Typically, a tire contains an antioxidant, and the outer layer of the sidewall portion, the tread portion, or the like of the tire usually contains the antioxidant.

In the tire according to the present disclosure, the outer layer is preferably the outer layer of the sidewall portion.

This improves the appearance of the tire more effectively.

In the tire according to the present disclosure, two or more different polyurethane foam layers may be laminated on the outer layer of the tire with the barrier layer therebetween, in a state of being stacked and/or combined with each other.

Examples of forms in which the two or more different polyurethane foam layers are stacked and laminated on the outer layer of the tire with the barrier layer therebetween include a from in which a first polyurethane foam layer is laminated on the outer layer of the sidewall portion and a second polyurethane foam layer is laminated on the first polyurethane foam layer. In this example, the barrier layer may be located between the outer layer of the tire and the first polyurethane foam layer, located between the first polyurethane foam layer and the second polyurethane foam layer, or located between the outer layer of the tire and the first polyurethane foam layer and between the first polyurethane foam layer and the second polyurethane foam layer. The barrier layer is preferably located between the outer layer of the tire and the first polyurethane foam layer or located between the outer layer of the tire and the first polyurethane foam layer and between the first polyurethane foam layer and the second polyurethane foam layer, from the viewpoint of more efficiently suppressing the transfer of the antioxidant from the outer layer of the tire to the polyurethane foam layer. The same applies to the case where the number of polyurethane foam layers is three or more.

Examples of forms in which the two or more different polyurethane foam layers are combined and laminated on the outer layer of the tire include a form in which the first polyurethane foam layer containing a red pigment as a design substance is laminated on a part of the outer layer of the sidewall portion and the second polyurethane foam layer containing a black pigment as a design substance is laminated on another part of the outer layer of the sidewall portion, and a form in which the first polyurethane foam layer containing a pigment as a design substance is laminated on a part of the outer layer of the sidewall portion and the second polyurethane foam layer containing a luminous powder as a design substance is laminated on another part of the outer layer of the sidewall portion.

The tire having the polyurethane foam layer laminated on the outer layer is not limited, and a publicly known tire may be used. Examples of the tire include passenger vehicle tires, racing tires, unicycle tires, motorcycle tires, tricycle tires, aircraft tires, construction vehicle tires, and agricultural machine tires.

A method of producing the tire according to the present disclosure is not limited. An example of the method involves laminating a polyurethane foam layer on an outer layer of an unvulcanized raw tire with a barrier layer therebetween and vulcanizing a laminated body of the raw tire, the barrier layer, and the polyurethane foam layer to produce a tire having the polyurethane foam layer laminated on its outer layer with the barrier layer therebetween. Another example of the method involves laminating a barrier layer on an outer layer of a produced tire using an adhesive and further laminating a polyurethane foam layer on the barrier layer using the adhesive to produce a tire.

EXAMPLES

The presently disclosed techniques will be described in more detail below by way of examples, although these examples are intended for illustrative purposes only, and are not intended to limit the scope of the present disclosure in any way.

The details of the materials used in the examples are as follows.

- Rubber composition material for barrier layer

<Rubber component (A)>

Natural rubber (NR): RSS #3.

Butadiene rubber (BR): trade name "UBEPOL BR® 150L" produced by Ube Industries, Ltd. (UBEPOL BR is a registered trademark in Japan, other countries, or both).

Brominated butyl rubber (Br-IIR): high-viscosity butyl, the trade name "Bromobutyl 2255" produced by Exxon Mobil Corporation.

Bromide of isobutylene-p-methylstyrene copolymer rubber: trade name "Exxpro 3745" produced by Exxon Mobil Corporation.

<Filler>

Clay (laminar or platy clay mineral (B)): trade name "Polyfil DL" produced by J.M. Huber Corporation, average aspect ratio = 20, average particle size = 3.2 $\mu$m.

Carbon black: trade name "ASAHI #78" produced by Asahi Carbon Co., Ltd.

<Others>

Vulcanization accelerator (DM): di-2-benzothiazolyl disulfide, trade name "NOCCELER® DM" produced by Ouchi Shinko Chemical Industrial Co., Ltd. (NOCCELER is a registered trademark in Japan, other countries, or both).

Vulcanization accelerator (DM): di-2-benzothiazolyl disulfide, trade name "NOCCELER® DM" produced by Ouchi Shinko Chemical Industrial Co., Ltd.

Vulcanization accelerator (CZ): N-cyclohexyl-2-benzothiazolylsulfenamide, trade name "NOCCELER® CZ" produced by Ouchi Shinko Chemical Industrial Co., Ltd.

Process oil 1: trade name "A/O MIX.®" produced by Sankyo Yuka Kogyo K.K. (A/O MIX. is a registered trademark in Japan, other countries, or both).

Process oil 2: trade name "Blown Asphalt 10-20" produced by Nippon Oil Corporation.

Glycerin fatty acid ester composition (processability improving agent (C)): glycerin fatty acid ester composition prepared according to the method described in Production Example 1 in WO 2014/185545 A1, by performing synthesis with the fatty acid being changed from octanoic acid to a palm-derived hardened fatty acid in the same molar amount and further performing molecular distillation, glycerin fatty acid monoester content = 97 mass%, constituent fatty acids including 54 mass% of stearic acid, 42 mass% of palmitic acid, and 4 mass% of other fatty acids.

- Polyurethane foam

Trade name "EVERLIGT® HZCD" produced by Bridgestone Chemitech Co., Ltd. (EVERLIGT is a registered trademark in Japan, other countries, or both), closed cell structure, cell diameter = 350 $\mu$m, air permeability for thickness of 2 mm = 150 cc/cm$^2$/sec.

- Binder

Acrylic resin: "BS050301-1" produced by Enex Co., Ltd., acrylic emulsion.

- Design substance

Pigment: trade name "GP WHITE #101" produced by Mikuni Color Ltd., white pigment.

- Rubber sheet composition (assuming sidewall portion rubber as outer layer of tire)

Natural rubber (NR): RSS #3, 40 parts by mass.
Butadiene rubber (BR): trade name "JSR BR01" produced by JSR Corporation, 60 parts by mass.
Carbon black: N339, 27 parts by mass.
Silica: trade name "Nipsil® AQ" produced by Tosoh Silica Corporation (Nipsil is a registered trademark in Japan, other countries, or both), 27 parts by mass.
Silane coupling agent: 2.5 parts by mass.
Process oil: 15 parts by mass.
Antioxidant: trade name "NOCRAC® 6C" produced by Ouchi Shinko Chemical Industrial Co., Ltd. (NOCRAC is a registered trademark in Japan, other countries, or both), 3 parts by mass.
Stearic acid: 2 parts by mass.
Zinc oxide: 3 parts by mass.
Sulfur: 1.5 parts by mass.
Vulcanization accelerator (DPG): 0.8 parts by mass.
Vulcanization accelerator (DM): 1 part by mass.
Vulcanization accelerator (NS): 1 part by mass.
Color difference meter: spectral colorimetry system CM-700d produced by Konica Minolta, Inc., C light source 2° SCE mode.
Components were kneaded according to each formulation shown in Table 1 to prepare a rubber composition for a barrier layer, and an unvulcanized barrier layer rubber sheet (size: 5.5 cm × 5.5 cm, thickness: 0.7 mm) of each of Examples and Comparative Example 1 was produced.

[Table 1]

| | | Comparative Example 1 | Example 1 | Example 2 | Example 3 | Example 4 |
|---|---|---|---|---|---|---|
| Formulation of rubber composition for barrier layer (part by mass) | NR | 40 | - | - | 10 | - |
| | BR | 60 | - | - | - | - |
| | Br-IIR | - | 100 | 70 | 90 | 100 |
| | Exxpro 3745 | - | - | 30 | - | - |
| | Clay | - | 30 | 30 | - | 30 |
| | Carbon black | 35 | 40 | 40 | 67 | 40 |
| | Stearic acid | 2 | 1.3 | - | 2 | - |
| | Sulfur | 1.58 | 0.68 | 0.68 | 0.68 | 0.68 |
| | Vulcanization accelerator DM | 0.2 | 1 | 1 | 1 | 1 |
| | Vulcanization accelerator CZ | 0.5 | - | - | - | - |
| | Zinc oxide | 3 | 2 | 2 | 2 | 2 |
| | Process oil 1 | - | 5 | - | 14 | - |
| | Process oil 2 | 3 | - | - | - | - |
| | Glycerin fatty acid ester composition | - | - | - | - | 1 |

For each obtained polyurethane foam layer, an unvulcanized rubber sheet (size: 20 cm × 10 cm, thickness: 10 mm), the unvulcanized barrier layer rubber sheet, and a polyurethane foam layer (size: 15 cm × 15 cm, thickness:

2 mm) were stacked in this order and vulcanized under the conditions of 160 °C and 15 min, to obtain a rubber sample having the polyurethane foam layer laminated on the rubber sheet with the barrier layer therebetween. In the rubber composition for a barrier layer in Comparative Example 1, not butyl rubber but the same natural rubber and butadiene rubber as rubber components of the foregoing rubber sheet (assuming sidewall portion rubber as the outer layer of the tire) were blended as the rubber component (A) as shown in Table 1. Accordingly, in Comparative Example 1, a rubber sample in which the barrier layer of the rubber sample in Examples was replaced with sidewall portion rubber not containing an antioxidant, i.e. a rubber sample in which sidewall portion rubber (thickness: 0.7 mm) not containing an antioxidant was interposed between the rubber sheet and the polyurethane foam layer, was obtained.

<Brown discoloration suppressibility>

For each of Examples 1 to 4 and Comparative Example 1, the L value was measured using a color difference meter for the rubber sample immediately after production and the rubber sample left outdoors for 18 days after production. The results are shown in Table 2. A higher L value indicates that the white part of the polyurethane foam layer was whiter. A smaller difference between the initial L value and the L value after 18 days indicates that the white part of the polyurethane foam layer was less discolored and the brown discoloration suppressibility was higher.

[Table 2]

|  | Comparative Example 1 | Example 1 | Example 2 | Example 3 | Example 4 |
|---|---|---|---|---|---|
| Initial L value (whiteness) | 88 | 92 | 91 | 91 | 94 |
| L value after 18 days (whiteness) | 42 | 86 | 85 | 80 | 86 |

<Adhesiveness>

For each of Examples 2 and 4 and Comparative Example 1, rubber samples each having a thickness of 5 mm were co-crosslinked, punched out to a size of 10 cm with a width of 1 inch, and the adhesiveness was tested using a T-shaped sample having a handle portion. The following criteria were used for evaluation. Criterion A corresponds to best adhesiveness. Criterion C is allowable in actual use.

Criterion A: 85 N/inch or more.
Criterion B: 70 N/inch or more and less than 85 N/inch.
Criterion C: less than 70 N/inch.

[Table 3]

|  | Comparative Example 1 | Example 2 | Example 4 |
|---|---|---|---|
| Tire rubber-barrier layer adhesiveness | A | B | A |

As shown in Table 2, the rubber sample of each Example had a high L value of 50 or more even after being left outdoors for 18 days, and had excellent brown discoloration suppressibility and whiteness. The rubber sample of Comparative Example 1 was inferior in brown discoloration suppressibility, despite a rubber sheet with no antioxidant being provided between the rubber sheet assuming sidewall portion rubber as the outer layer of the tire and the polyurethane foam layer.

INDUSTRIAL APPLICABILITY

It is therefore possible to provide a tire that prevents a polyurethane foam layer from discoloring to brown.

**Claims**

1.   A tire comprising:

a polyurethane foam layer laminated on an outer layer of the tire with a barrier layer therebetween,

wherein the polyurethane foam layer contains a polyurethane foam, and
the barrier layer is formed from a rubber composition containing butyl rubber as a rubber component (A).

2. The tire according to claim 1, wherein the rubber composition contains a bromide of isobutylene-p-methylstyrene copolymer rubber.

3. The tire according to claim 1 or 2, wherein the rubber composition contains a laminar or platy clay mineral (B).

4. The tire according to any one of claims 1 to 3, wherein in the polyurethane foam layer, a binder is bonded to the polyurethane foam.

5. The tire according to any one of claims 1 to 4, wherein the polyurethane foam layer contains a design substance.

6. The tire according to claim 5, wherein the design substance is selected from the group consisting of carbon black, a pigment, metal fine particles, a luminous powder, a fluorescent powder, retroreflective particles, color flop particles, and a chromic material.

7. The tire according to claim 5, wherein a cell diameter of the polyurethane foam is 500 $\mu$m or less, and the design substance is selected from the group consisting of carbon black, a pigment, metal fine particles, a luminous powder, a fluorescent powder, retroreflective particles, color flop particles, and a chromic material.

8. The tire according to claim 5, wherein a cell diameter of the polyurethane foam is 500 $\mu$m or more, and the design substance is selected from the group consisting of a pigment, metal fine particles, a luminous powder, a fluorescent powder, retroreflective particles, color flop particles, and a chromic material.

9. The tire according to any one of claims 1 to 8, wherein air permeability of the polyurethane foam is 30 cc/cm$^2$/sec to 500 cc/cm$^2$/sec for a thickness of 2 mm.

10. The tire according to any one of claims 5 to 9, wherein in the polyurethane foam layer, a binder is bonded to the polyurethane foam, and
the design substance is supported by the polyurethane foam via the binder.

11. The tire according to any one of claims 1 to 10, wherein in the polyurethane foam layer, a binder is bonded to the polyurethane foam, and
the binder is one or more selected from the group consisting of a urethane-based resin and an acrylic resin.

12. The tire according to claim 6 or 7, wherein the carbon black is one or more selected from the group consisting of furnace blacks.

13. The tire according to any one of claims 1 to 12, wherein the polyurethane foam layer contains a design substance, and the design substance contains particles having a maximum diameter of 250 $\mu$m or less.

14. The tire according to any one of claims 1 to 13, wherein the polyurethane foam layer comprises two or more different polyurethane foam layers that are laminated on the outer layer of the tire in a state of being stacked and/or combined with each other.

15. The tire according to any one of claims 1 to 14, wherein the outer layer is an outer layer of a sidewall portion.

16. The tire according to any one of claims 1 to 15, wherein the rubber composition further contains a laminar or platy clay mineral (B) and at least one of a processability improving agent (C) and an unsaturated carboxylic acid metal salt (E), and
the rubber composition does not contain a stearic acid (D), or contains 0.1 parts by mass or less of the stearic acid (D) with respect to 100 parts by mass of the rubber component (A).

17. The tire according to claim 16, wherein the rubber composition contains the processability improving agent (C) and the unsaturated carboxylic acid metal salt (E).

18. The tire according to claim 16 or 17, wherein the processability improving agent (C) is at least one selected from the group consisting of a glycerin fatty acid ester composition and a stearylamine derivative.

19. The tire according to any one of claims 16 to 18, wherein the unsaturated carboxylic acid metal salt (E) is at least one selected from the group consisting of an acrylic acid metal salt and a methacrylic acid metal salt.

## INTERNATIONAL SEARCH REPORT

| International application No. |
| --- |
| PCT/JP2019/042217 |

**A.   CLASSIFICATION OF SUBJECT MATTER**
B32B  25/08(2006.01)i;  B60C  1/00(2006.01)i;  B60C  13/00(2006.01)i;  C08K
5/098(2006.01)i; C08K 7/00(2006.01)i; B60C 11/00(2006.01)i
FI:     B60C13/00  E;  B60C11/00  E;  B60C1/00  Z;  B60C13/00  C;  B32B25/08;
        C08K5/098; C08K7/00
According to International Patent Classification (IPC) or to both national classification and IPC

**B.   FIELDS SEARCHED**

Minimum documentation searched (classification system followed by classification symbols)
B32B25/08; B60C1/00; B60C13/00; C08K5/098; C08K7/00; B60C11/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| X<br>A | JP 2003-326926 A (THE YOKOHAMA RUBBER CO., LTD., THE HONDA MOTOR CO., LTD.) 19.11.2003 (2003-11-19) claims, paragraphs [0019], [0020], [0038]-[0042], examples, figures | 1, 4, 9, 14-15<br>2-3, 5-8, 10-13, 16-19 |
| A | JP 2015-507571 A (BRIDGESTONE CORPORATION) 12.03.2015 (2015-03-12) entire text | 1-19 |
| A | JP 2017-193675 A (BRIDGESTONE CORPORATION) 26 October 2017 (2017-10-26) entire text | 1-19 |
| A | JP 2017-105375 A (BRIDGESTONE CORPORATION) 15.06.2017 (2017-06-15) entire text | 1-19 |
| A | JP 10-319843 A (BRIDGESTONE CORPORATION) 04.12.1998 (1998-12-04) entire text | 1-19 |

☒   Further documents are listed in the continuation of Box C.        ☒   See patent family annex.

| * Special categories of cited documents: | "T" later document published after the international filing date or priority date and not in conflict with the application but cited to understand the principle or theory underlying the invention |
| --- | --- |

"A"   document defining the general state of the art which is not considered to be of particular relevance

"E"   earlier application or patent but published on or after the international filing date

"L"   document which may throw doubts on priority claim(s) or which is cited to establish the publication date of another citation or other special reason (as specified)

"O"   document referring to an oral disclosure, use, exhibition or other means

"P"   document published prior to the international filing date but later than the priority date claimed

"X"   document of particular relevance; the claimed invention cannot be considered novel or cannot be considered to involve an inventive step when the document is taken alone

"Y"   document of particular relevance; the claimed invention cannot be considered to involve an inventive step when the document is combined with one or more other such documents, such combination being obvious to a person skilled in the art

"&"   document member of the same patent family

| Date of the actual completion of the international search | Date of mailing of the international search report |
| --- | --- |
| 06 January 2020 (06.01.2020) | 21 January 2020 (21.01.2020) |

| Name and mailing address of the ISA/<br>    Japan Patent Office<br>    3-4-3, Kasumigaseki, Chiyoda-ku,<br>    Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
|---|
| PCT/JP2019/042217 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2016-40152 A (HIRAKATA GIKEN, INC., POLYSIS CO., LTD.) 24.03.2016 (2016-03-24) entire text | 1-19 |

Form PCT/ISA/210 (continuation of second sheet) (January 2015)

**INTERNATIONAL SEARCH REPORT**

Information on patent family members

International application No.

PCT/JP2019/042217

| Patent Documents referred in the Report | Publication Date | Patent Family | Publication Date |
|---|---|---|---|
| JP 2003-326926 A | 19 Nov. 2003 | US 2004/0256042 A1 claims, paragraphs [0021], [0022], [0040]-[0045], examples, figures WO 2002/085649 A1 WO 2003/076214 A1 | |
| JP 2015-507571 A | 12 Mar.2015 | US 2014/0363680 A1 entire text WO 2013/093895 A1 EP 2794253 | |
| JP 2017-193675 A | 26 Oct. 2017 | (Family: none) | |
| JP 2017-105375 A | 15 Jun. 2017 | (Family: none) | |
| JP 10-319843 A | 04 Dec. 1998 | (Family: none) | |
| JP 2016-40152 A | 24 Mar. 2016 | (Family: none) | |

Form PCT/ISA/210 (patent family annex) (January 2015)

**REFERENCES CITED IN THE DESCRIPTION**

**Patent documents cited in the description**

- JP 2018206101 A
- JP 2003535762 A
- JP 2017128469 A
- WO 2013039180 A1
- JP 2011140585 A
- JP 2005314540 A

- JP 2012031232 A
- JP 2009019195 A
- JP 2010208040 A
- JP 2004255041 A
- JP 2011079232 A
- WO 2014185545 A1